# EUROPÄISCHE PATENTSCHRIFT

(11) **EP 3 133 534 B1**
(45) Veröffentlichungstag und Bekanntmachung des Hinweises auf die Patenterteilung: **05.07.2017**
(21) Anmeldenummer: 15181643.6
(22) Anmeldetag: 19.08.2015
(51) Int. Cl.: G06K 19/077, A44C 27/00

(54) **WERTGEGENSTAND UND SYSTEM ZUM IDENTIFIZIEREN UND VERIFIZIEREN EINES WERTGEGENSTANDES**
VALUABLE OBJECT AND SYSTEM FOR IDENTIFYING AND VERIFYING A VALUABLE OBJECT
OBJET DE VALEUR ET SYSTEME D'IDENTIFICATION ET DE VERIFICATION D'UN OBJET DE VALEUR

(43) Veröffentlichungstag der Anmeldung: 22.02.2017
(73) Patentinhaber: Niedermeier, Klaus, 94339 Leiblfing (DE)
(72) Erfinder: Reithmeier, Sieglinde, 94339 Leiblfing (DE)
(74) Vertreter: Naessens, Stephan

(56) Entgegenhaltungen:
- WO-A2-2010/090430
- DE-U1-202005 008 540
- US-A1- 2014 292 477

## Beschreibung

Die vorliegende Erfindung betrifft einen Wertgegenstand und ein System zum Identifizieren und Verifizieren eines Wertgegenstandes gemäß der im Oberbegriff des Patentanspruches 1 bzw. 10 näher beschriebenen Art.

Beispielsweise aus der Druckschrift DE 20 2005 008 540 U1 ist eine kratzfeste Oberfläche für Schmuck bekannt. Wenn Schmuck aus Edelmetallen, wie z. B. Gold Silber oder dergleichen hergestellt ist, weist die Oberfläche in der Regel eine verminderte Kratzfestigkeit auf. Um eine unerwünschte Abnutzung oder Zerstörung der Oberfläche zu verhindern, wird die Oberfläche des Schmuckes mit Partikeln von besonderer Härte versehen. Somit wird eine gehärtete Oberfläche bei dem Schmuck vorgesehen, sodass die Oberfläche des Schmuckes gegen unerwünschte Abnutzung und Zerstörung geschützt ist.

Es hat sich gezeigt, dass bei Wertgegenständen, wie zum Beispiel Schmuck oder dergleichen Manipulationen möglich sind, die den Wert des Wertgegenstandes erheblich verringern können, ohne dass dies äußerlich wahrnehmbar ist. Im Rahmen beispielsweise von Münzfälschungen ist bekannt, dass der aus einem Edelmetall hergestellte Wertgegenstand durch zumindest teilweises Entfernen des Edelmetalls, insbesondere des Innenkerns, und durch Einbringen eines kostengünstigen Ersatzwerkstoffes eine Manipulation vorgenommen wird. Diese Manipulation ist rein äußerlich nicht erkennbar. Um derartige Manipulationen erkennen zu können, sind verschiedene Laborprüfverfahren erforderlich, die zeitaufwendig und kostenintensiv sind. Unter bestimmten Umständen ist auch ein materialzerstörendes Prüfverfahren notwendig, um die Manipulationen erkennen zu können. Hierbei wird jedoch in nachteiliger Weise der Wertgegenstand zerstört oder zumindest erheblich beschädigt.

Beispielsweise aus der Druckschrift US 2014 0292477 A1 ist ein System und ein Verfahren für die Identifizierung und Authentifizierung von Edelmetallen und kleinen Schmuckstücken bekannt. Das System umfasst einen RFID-Chip, der mit einem externen RFID-Lesegerät kommunizieren kann. Das Lesegerät steht über einen Computer mit einer Datenbank in Verbindung, so dass die Kennung des Chips in der Datenbank abgelegt werden kann. In nachteiliger Weise kann bei dem System eine Manipulation des Edelmetalls oder des Schmuckes nicht erkannt werden, sodass eine schnelle und sichere Überprüfung zum Identifizieren nicht möglich ist.

Der vorliegenden Erfindung liegt die Aufgabe zu Grunde, einen Wertgegenstand und ein System der eingangs beschriebenen Gattungen vorzuschlagen, welche ein schnelles und sicheres Identifizieren und Verifizieren des Wertgegenstandes zerstörungsfrei ermöglichen.

Diese Aufgabe wird erfindungsgemäß durch die Merkmale des Patentanspruches 1 bzw. 10 gelöst, wobei aus den jeweiligen Unteransprüchen und der Beschreibung sowie den Zeichnungen vorteilhafte Ausgestaltungen hervorgehen.

Die der Erfindung zugrunde liegende Aufgabe wird somit durch einen Wertgegenstand, umfassend einen Grundkörper aus Gold, vorzugsweise aus Feingold, gelöst, wobei der Grundkörper von einer Schutzschicht umgeben ist und wobei die Schutzschicht zumindest einen auslesbaren vorzugsweise personifizierten Sicherheitscode mit zumindest einem Sicherheitsmerkmal zum eindeutigen Identifizieren und Verifizieren bzw. zum Authentifizieren des Wertgegenstandes umfasst.

Um den Wertgegenstand einerseits gegen äußere Beschädigungen und andererseits auch gegen Manipulationen sicher zu schützen, ist die Schutzschicht vorgesehen, die den Wertgegenstand vollständig umgibt und die den das zerstörungsfreie Identifizieren und Verifizieren des Wertgegenstandes realisierenden Sicherheitscode aufnimmt. Durch die erfindungsgemäße Anordnung bzw. Integration des Sicherheitscodes in der bzw. in die Schutzschicht wird die besonders schnelle und sichere Überprüfung des Wertgegenstandes realisiert. Auf diese Weise kann nicht nur bei einer Manipulation, sondern auch bei Verlust des Wertgegenstandes besonders einfach und schnell über den auslesbaren personifizierten Sicherheitscode festgestellt werden, ob der Wertgegenstand echt ist. Auslesbar bedeutet in diesem Zusammenhang, dass der Sicherheitscode optisch, elektronisch oder dergleichen quasi in Echtzeit auslesbar ist. Personifiziert bedeutet in diesem Zusammenhang, dass der Code eindeutig identifizierbar und auch z. B. einem Eigentümer zuordenbar ist.

Somit wird mit dem vorgeschlagenen Wertgegenstand eine fälschungssichere Wertanlage z. B. als Sammler- oder Tauschobjekt geschaffen. Die Abmessungen und die äußere Oberflächenform des Grundkörpers bzw. der Schutzschicht können beliebig gewählt werden. Beispielsweise können zusätzliche Prägungen oder dergleichen vorhanden sein. Durch die fälschungssichere Hochleistungsschutzschicht wird ein Manipulieren des vorzugsweise aus Feingold mit einer Reinheit von 24 Karat bestehenden Wertgegenstandes sicher verhindert.

Beispielsweise kann die den Grundkörper umgebende Schutzschicht im chemische oder nicht chemischen Beschichtungsverfahren ausgeführt sein. Durch die Verwendung von Nanopartikeln und/oder Nanokomponenten wird eine beständige, bruchsichere und verschleißfreie sowie dauerhaft und langlebig haltbare Schutzschicht realisiert. Die bestimmte Anordnung der Nanopartikel schützt auch den Sicherheitscode vor Manipulation. Es ist auch denkbar, dass zum Beispiel eine unzerstörbare Spezialfolie oder Vlies und/oder auch eine zusätzliche Hologrammträgerkomponente als Sicherheitsmerkmal in die Schutzschicht eingesetzt wird.

Der vorgeschlagene Sicherheitscode des Wertgegenstandes, welcher sich innerhalb und/oder auch auf der Oberfläche der Schutzschicht befinden kann, ermöglicht nicht nur eindeutige Kennzeichnung des Wertgegenstandes und damit eine eindeutige Identifizierung, sondern auch eine Verifizierung, da eine Veränderung des Codes beim Auslesen erfassbar ist. Jeder Wertgegenstand wird bei der Herstellung mit dem Sicherheitscode versehen, sodass ein individuelles, nicht charakteristisches, vorzugsweise zufallsgeneriertes einzigartiges Codemuster zum Beispiel mittels Nanopartikel und/oder mit anderen chemischen Beschichtungen erzeugt wird, so dass jeder Wertgegenstand seine eigene und einmalige Historie der Echtheitszertifizierung erhält. Auf diese Weise lässt sich der Wertgegenstand bzw. das Feingoldstück entlang der gesamten Laufzeit eindeutig Identifizieren und auch Verifizieren. Wenn der vollständige Gesamtcode nicht mehr in der Schutzschicht enthalten ist, beispielsweise durch Manipulation kann dies in Echtzeit beim Auslesen und auch nachträglich ohne weiteres erkannt werden.

Bei dem erfindungsgemäßen Wertgegenstand wird im Rahmen einer vorteilhaften Weiterbildung vorgesehen, dass zumindest ein weiteres Sicherheitsmerkmal zum zusätzlichen Verifizieren des Wertgegenstandes in der Schutzschicht vorgesehen ist. Durch die Verwendung des zumindest einen zusätzlichen Sicherheitsmerkmals wird bei dem vorgeschlagenen Wertgegenstand ein weiterer zuverlässiger Schutzmechanismus realisiert. Durch diesen erfindungsgemäßen Doppelschutz kann ein Wertverlust bei dem Wertgegenstand durch Manipulation sicher ausgeschlossen werden. Dies auch insbesondere dadurch, dass die Lebensdauer des Goldstückes bzw. des Wertgegenstandes durch die vorhandene Sicherheitselemente bis zum Herstellungstag wert- und fälschungssicher zurückverfolgbar ist.

Als Sicherheitsmerkmal können beispielsweise offensichtliche Sicherheitsmerkmale, wie zum Beispiel Echtfarbeneffekte, 3D/3D switch (3D-sichtbar machen), BAS-relief (Relief-Darstellung), E-beam motion (Elektronenstrahllithografie im Nanobereich) oder dergleichen eingesetzt werden. Es ist jedoch auch denkbar das entweder alternativ oder auch zusätzlich offenliegende Sicherheitsmerkmale, wie zum Beispiel Mikrotext, smart glint (kleine Schimmer), letter lens / mirrow lens (Linsen), decolor effect (Wasserzeichen) oder dergleichen eingesetzt werden. Zusätzlich oder auch alternativ können versteckte und/oder unsichtbare Sicherheitsmerkmale verwendet werden. Versteckte Sicherheitsmerkmale können zum Beispiel Mikro- bzw. Nanotexte, nanoswitch (Informationen zwischen einzelnen Prozessorkerne über Lichtsignale anstelle über Elektronen), animated cover laser readable image CLR (versteckter Text oder versteckte Bilder), Volumenabbildungen (Erfassung der Form, der Gesamtoberfläche und auch der lokalen Materialeigenschaften, aus der die räumliche und quantitative Struktur des Wertgegenstandes rekonstruiert wird) oder dergleichen sein. Als unsichtbare Sicherheitsmerkmale können forensische Merkmale, wie zum Beispiel das Einbringen von DNA oder dergleichen Material verwendet werden.

Die der Erfindung zugrunde liegende Aufgabe wird auch durch ein System oder eine Anordnung zum Identifizieren und Verifizieren des vorbeschriebenen Wertgegenstandes, gelöst, indem jedem Wertgegenstand ein einmaliger und unverwechselbarer auslesbarer Sicherheitscode zugeordnet ist und der zugeordnete Sicherheitscode des Wertgegenstandes, der nur in seiner Gesamtheit aller Codekomponenten Gültigkeit hat, in einer gesicherten Datenbank zum Identifizieren und Verifizieren abgespeichert ist.

Dadurch, dass der Sicherheitscode in einer gesicherten Datenbank bzw. einem Datenbankserver z. B. personifiziert hinterlegt ist, ist es ohne weiteres für jeden Nutzer an Ort und Stelle quasi in Echtzeit möglich den eindeutigen Verifizierungs-und Identifizierungscode des Wertgegenstandes über ein entsprechendes Auslesegerät, z. B. als mobiles Endgerät, auslesen zu können. Hierbei kann vorzugsweise als Auslesegerät bzw. als Lesegerät auch ein mit einer entsprechenden Anwendung versehenes Smartphone, Notebook, Computer, Tablet oder dergleichen genutzt werden. Der ausgelesene Code kann über eine abhörsichere, verschlüsselte Datenverbindung zum Beispiel über eine Internetverbindung mit dem in der Datenbank hinterlegten Code verglichen werden, um nicht nur eine Identifizierung- bzw. Authentifizierungsprüfung, sondern auch eine Verifizierungsprüfung vorzunehmen.

In der Datenbank des erfindungsgemäßen Systems kann für jeden hergestellten Wertgegenstand der entsprechende Sicherheitscode hinterlegt werden, wobei dem Sicherheitscode auch spezifische Daten, wie zum Beispiel Material, Gewicht, Qualität, Maße, Volumen oder dergleichen des Wertgegenstandes zugeordnet werden können. Auf diese Weise ist es möglich, im Rahmen einer Abfrage des Sicherheitscodes anhand der spezifischen Daten den aktuellen Wert des Wertgegenstandes zu ermitteln. Hierbei ist es besonders von Vorteil, dass der Grundkörper des Wertgegenstandes aus Feingold mit etwa 24 Karat hergestellt ist, da der aktuelle Goldpreis weltweit abgefragt werden kann und somit der aktuelle Wert für jedes Land ausgegeben werden kann. Die Abfrage des Sicherheitscodes anhand der spezifischen Daten ermöglicht auch die 100%ige Bestätigung der Originalität und die Gesamtheit aller Codekomponenten des Goldstücks. Dagegen wird bei einer stattgefundenen Manipulation am Goldstück die Bestätigung verweigert.

Der vorgeschlagene Wertgegenstand kann in Verbindung mit dem Sicherheitscode als Wertsicherungssystem zum Beispiel im Tauschhandel, in Bankgeschäften oder als sichere private Wertanlage eingesetzt werden. Somit ist der Wertgegenstand von wirtschaftlichen und politischen Faktoren, aber auch von bestimmten länderspezifischen Ereignissen unabhängig. Vorzugsweise wird der Wertgegenstand als Sammlergegenstand gehandelt.

Nachfolgend wird die vorliegende Erfindung anhand der Zeichnungen weiter erläutert. Es zeigen:
Figur 1 eine schematische Draufsicht auf einen erfindungsgemäßen Wertgegenstand;
Figur 2 eine schematische geschnittene Ansicht entlang der Schnittlinie A-A gemäß Figur 1; und
Figur 3 eine schematische Ansicht eines erfindungsgemäßen System zum Identifizieren und Verifizieren eines Wertgegenstandes.

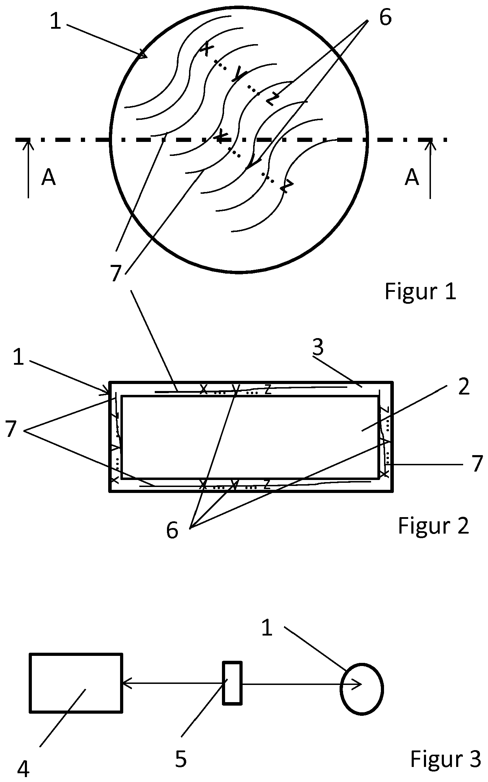

In Figur 1 ist beispielhaft eine Ausführungsvariante eines erfindungsgemäßen Wertgegenstandes 1, beispielsweise als Feingoldstück dargestellt. Bei der dargestellten Ausführungsvariante weist der Gegenstand beispielhaft eine kreiszylindrische flache Form auf, die bei Bedarf mit entsprechenden Prägungen versehen ist.

Wie insbesondere aus der in Figur 2 dargestellten Schnittansicht entlang der Schnittlinie A-A ersichtlich ist, umfasst der vorgeschlagene Wertgegenstand 1 einen Grundkörper 2 aus Feingold, der von einer Schutzschicht 3 vollständig umgeben und damit dieser vor Manipulation geschützt ist. Die Schutzschicht 3 ist als chemische oder nicht chemische Nano-Legierungsschicht oder dergleichen ausgeführt. Des Weiteren ist innerhalb der Schutzschicht 3 zumindest ein zufallsgenerierter z. B. personifizierter Sicherheitscode 6 zur Identifizierung und Verifizierung vorgesehen, wobei der Sicherheitscode 6 lediglich schematisch z. B. durch eine Buchstabenfolge xyz in Figur 1 und 2 angedeutet ist. Der Sicherheitscode 6 kann sich je nach Bedarf über die gesamte oder auch nur über Teile der Schutzschicht sowohl innerhalb als auch oberflächenmäßig erstrecken. Ferner ist zur zusätzlichen Verifikation zumindest ein uncharakteristisches Sicherheitsmerkmal 7 vorgesehen. Auf diese Weise kann der Wertgegenstand 1 bzw. die Unversehrtheit der Schutzschicht 3 verifiziert werden, da durch das zumindest eine vorhandene Sicherheitsmerkmal 7 eine Manipulation des Grundkörpers 2 und des in der Schutzschicht enthaltenen Sicherheitscodes 6 unmöglich ist. Das vorhandene Sicherheitsmerkmal 7 ist in den Figuren 1 und 2 lediglich schematisch angedeutet. Somit wird umfasst der vorgeschlagene Wertgegenstand einen ganzheitlichen Schutz.

In Figur 3 ist ein erfindungsgemäßes System zum Identifizieren und Verifizieren des Wertgegenstandes 1 dargestellt. Das System umfasst eine gesicherte Datenbank bzw. einen gesicherten Datenbankserver 4, in der bzw. in dem der zum Beispiel zufallsgenerierte Sicherheitscode 6 des jeweiligen Wertgegenstandes 1 gespeichert ist. Dies erfolgt beispielsweise nach der Herstellung und vor dem Verkauf des Wertgegenstandes 1, so dass dieser in der Datenbank 4 registriert ist. Über ein Auslesegerät 5, welches zum Beispiel über das mobile Internet (vgl. Pfeil in Figur 3) mit der Datenbank 4 verbindbar ist, kann der in der Schutzschicht 3 des Wertgegenstandes 1 vorhandene Sicherheitscode 6 ausgelesen werden (vgl. Pfeil in Figur 3) und über die Datenverbindung mit Hilfe der Datenbank 4 identifiziert und verifiziert werden. Auf diese Weise ist eine Identifizierung des Wertgegenstandes 1 auch mobil schnell möglich, um einen unkomplizierten und sicheren Tauschhandel realisieren zu können. Sobald die Abfrage über das Auslesegerät 5 bei der Datenbank 4 erfolgreich abgeschlossen ist, können spezifische Daten des Wertgegenstandes 1, die dem Sicherheitscode 6 zugeordnet sind, abgefragt werden, so dass beispielsweise über den aktuellen Goldpreis der tagesaktuelle Wert des Wertgegenstandes 1 in Echtzeit ausgegeben bzw. abgerufen werden kann.

Als Auslesegerät 5 kann vorzugsweise ein Mobiltelefon oder Tablet mit einer entsprechenden Applikation verwendet werden, die den Sicherheitscode 6 zum Beispiel optisch-elektrisch oder dergleichen erfassen kann und dann die Daten über die gesicherte mobile Datenverbindung an die Datenbank 4 bzw. an den Datenbankserver 4 zur Abfrage übermitteln kann. Anschließend wird das Ergebnis der Anfrage von dem Datenbankserver 4 an das Auslesegerät bzw. das Mobiltelefon 5 übermittelt und über die Applikation angezeigt. Das Auslesegerät 5 ist auch in der Lage, das in der Schutzschicht 3 vorhandene Sicherheitsmerkmal 7 auf Echtheit zu überprüfen.

### Bezugszeichen

- 1: Wertgegenstand
- 2: Grundkörper
- 3: Schutzschicht
- 4: Datenbank
- 5: Auslesegerät bzw. Mobiltelefon
- 6: Sicherheitscode
- 7: Sicherheitsmerkmal

## Patentansprüche

1. Wertgegenstand (1), umfassend einen Grundkörper (2) aus Gold, wobei der Grundkörper (2) von einer Schutzschicht (3) umgeben ist, **dadurch gekennzeichnet, dass** die Schutzschicht (3) zumindest einen auslesbaren Sicherheitscode zum Identifizieren und Verifizieren umfasst.

2. Wertgegenstand nach Anspruch 1, **dadurch gekennzeichnet, dass** der Sicherheitscode in die Schutzschicht (3) derart integriert ist, dass ein Manipulieren der Schutzschicht (3) durch Auslesen des Sicherheitscodes erfassbar ist.

3. Wertgegenstand nach einem der vorangehenden Ansprüche, **dadurch gekennzeichnet, dass** die Schutzschicht zumindest ein weiteres Sicherheitsmerkmale (7) zum Authentifizieren umfasst.

4. Wertgegenstand nach Anspruch 3, **dadurch gekennzeichnet, dass** als Sicherheitsmerkmal (7) ein uncharakteristisches Merkmal vorgesehen ist.

5. Wertgegenstand nach einem der Ansprüche 3 oder 4, **dadurch gekennzeichnet, dass** als Sicherheitsmerkmal (7) zumindest ein offensichtliches Merkmal (7) als Echtfarbeneffekt vorgesehen ist.

6. Wertgegenstand nach einem der Ansprüche 3 bis 5, **dadurch gekennzeichnet, dass** als Sicherheitsmerkmal (7) zumindest ein offenliegendes Merkmal (7) als Mikrotext vorgesehen ist.

7. Wertgegenstand nach einem der Ansprüche 3 bis 6, **dadurch gekennzeichnet, dass** als Sicherheitsmerkmal (7) zumindest ein verstecktes Merkmal (7) als Nanotext vorgesehen ist.

8. Wertgegenstand nach einem der Ansprüche 3 bis 7, **dadurch gekennzeichnet, dass** als Sicherheitsmerkmal (7) zumindest ein unsichtbares Merkmal (7) als forensisches Merkmal vorgesehen ist.

9. Wertgegenstand nach einem der vorangehenden Ansprüche, **dadurch gekennzeichnet, dass** eine Feingoldmünze mit einem Grundkörper (2) aus Feingold mit etwa 24 Karat vorgesehen ist.

10. System zum Identifizieren und Verifizieren eines Wertgegenstandes (1), nach einem der vorangehenden Ansprüche, **dadurch gekennzeichnet, dass** dem Wertgegenstand (1) zumindest ein auslesbarer Sicherheitscode (6) zugeordnet ist, und dass der zugeordnete Sicherheitscode (6) des Wertgegenstandes (1) in einer gesicherten Datenbank (4) zum Identifizieren und Verifizieren des Wertgegenstandes (1) abgespeichert ist.

11. System nach Anspruch 10, **dadurch gekennzeichnet, dass** der Sicherheitscode (6) des zu identifizierenden Wertgegenstandes (1) mit einem Auslesegerät (5) abrufbar ist und dass der ausgelesene Sicherheitscode (6) über eine verschlüsselte Datenverbindung mit dem in der Datenbank (4) gespeicherten Sicherheitscode (6) vergleichbar ist.

12. System nach Anspruch 10 oder 11, **dadurch gekennzeichnet, dass** dem in der Datenbank (4) gespeicherten Sicherheitscode (6) spezifische Daten des Wertgegenstandes (1) zugeordnet sind.

13. System nach Anspruch 12, **dadurch gekennzeichnet, dass** bei einer positiven Abfrage eines Sicherheitscodes (6) anhand der spezifischen Daten der aktuelle Wert des Wertgegenstandes (1) abrufbar ist.

## Claims

1. An object of value (1), comprising a main body (2), made of gold, wherein the main body (2) is surrounded by a protective layer (3), **characterized in that** the protective layer (3) comprises at least one readable security code for identification and verification.

2. The object of value according to claim 1, **characterized in that** the security code is integrated into the protective layer (3), such that tampering with the protective layer (3) is detectable by reading the security code.

3. The object of value according to one of the preceding claims, **characterized in that** the protective layer comprises at least one further security feature (7) for authentication.

4. The object of value according to claim 3, **characterized in that** an uncharacteristic feature is provided as the security feature (7).

5. The object of value according to one of claims 3 or 4, **characterized in that** at least one obvious feature (7) provided as a security feature (7) is provided as a true-color effect.

6. The object of value according to one of claims 3 to 5, **characterized in that**, as a security feature (7), at least one exposed feature (7) is provided as micro text.

7. The object of value according to one of claims 3 to 6, **characterized in that**, as a security feature (7), at least one hidden feature (7) is provided as nano text.

8. The object of value according to one of claims 3 to 7, **characterized in that**, as a security feature (7), at least one invisible feature (7) is provided as a forensic feature.

9. The object of value according to one of the preceding claims, **characterized in that** a fine gold coin with a main body (2) made of fine gold of about 24 carats is provided.

10. A system for identifying and verifying an object of value (1) according to any one of the preceding claims, **characterized in that** the object of value (1) is assigned a readable security code (6) and that the assigned security code (6) of the object of value (1) is stored in a secured database (4) for identifying and verifying the object of value (1).

11. The system according to claim 10, **characterized in that** the security code (6) of the object of value (1) to be identified is retrievable by means of a reader (5) and that the read security code (6) is comparable with the security code (6) stored in the database (4) via an encrypted data communication.

12. The system according to claim 10 or 11, **characterized in that** the security code (6) stored in the database (4) is assigned specific data of the object of value (1).

13. System according to claim 12, **characterized in that**, in the case of a successful query of a security code (6), the current value of the object of value (1) is retrievable by means of the specific data.

## Revendications

1. Objet de valeur (1), comprenant un corps de base (2) en or, le corps de base (2) étant entouré d'une couche de protection (3), **caractérisé en ce que** la couche de protection (3) comprend au moins un code de sécurité pouvant être lu pour l'identification et la vérification.

2. Objet de valeur selon la revendication 1, **caractérisé en ce que** le code de sécurité est intégré dans la couche de protection (3) de telle sorte qu'une intervention sur la couche de protection (3) peut être détectée par consultation du code de sécurité.

3. Objet de valeur selon l'une quelconque des revendications précédentes, **caractérisé en ce que** la couche de protection comprend au moins une marque de sécurité supplémentaire (7) pour l'authentification.

4. Objet de valeur selon la revendication 3, **caractérisé en ce qu'**une marque non caractéristique est prévue comme marque de sécurité (7).

5. Objet de valeur selon l'une quelconque des revendications 3 ou 4, **caractérisé en ce qu'**au moins une marque visible (7) sous forme d'effet à couleur réelle est prévue comme marque de sécurité (7).

6. Objet de valeur selon l'une quelconque des revendications 3 à 5, **caractérisé en ce qu'**au moins une marque exposée (7) sous forme de microtexte est prévue comme marque de sécurité (7).

7. Objet de valeur selon l'une quelconque des revendications 3 à 6, **caractérisé en ce qu'**au moins une marque cachée (7) sous forme de nanotexte est prévue comme marque de sécurité (7).

8. Objet de valeur selon l'une quelconque des revendications 3 à 7, **caractérisé en ce qu'**au moins une marque invisible (7) sous forme de marque forensique est prévue comme marque de sécurité (7).

9. Objet de valeur selon l'une quelconque des revendications précédentes, **caractérisé en ce qu'**une pièce en or fin avec un corps de base (2) en or fin d'environ 24 carats est prévu.

10. Système d'identification et de vérification d'un objet de valeur (1) selon l'une quelconque des revendications précédentes, **caractérisé en ce qu'**au moins un code de sécurité (6) pouvant être lu est affecté à l'objet de valeur (1), et **en ce que** le code de sécurité affecté (6) de l'objet de valeur (1) est enregistré dans une base de données sécurisée (4) pour identifier et vérifier l'objet de valeur (1).

11. Système selon la revendication 10, **caractérisé en ce que** le code de sécurité (6) de l'objet de valeur (1) à identifier peut être consulté avec un appareil de lecture (5) et **en ce que** le code de sécurité lu (6) peut être comparé au code de sécurité (6) enregistré dans la base de données (4) au moyen d'une connexion de données chiffrée.

12. Système selon la revendication 10 ou 11, **caractérisé en ce que** des données spécifiques de l'objet de valeur (1) sont affectées au code de sécurité (6) enregistré dans la base de données (4).

13. Système selon la revendication 12, **caractérisé en ce que** la valeur actuelle de l'objet de valeur (1) peut être consultée au moyen des données spécifiques en cas d'interrogation positive d'un code de sécurité (6).
